# EUROPEAN PATENT SPECIFICATION

(11) **EP 1 029 153 B1**
(45) Date of publication and mention of the grant of the patent: **09.11.2005**
(21) Application number: 98926572.3
(22) Date of filing: 11.06.1998
(51) Int. Cl.: F01D 5/00, F01D 5/28, B23P 6/00, B23K 35/30

(54) **TURBINE ENGINE VANE ASSEMBLY AND METHOD OF REPAIRING THE SAME**
TURBINENSCHAUFEL-ANORDNUNG UND VERFAHREN ZUR REPARATUR DERSELBEN
ASSEMBLAGE DE PALE DE MOTEUR A REACTION ET SA METHODE DE REPARATION

(43) Date of publication of application: 23.08.2000
(73) Proprietor: GENERAL ELECTRIC COMPANY, Schenectady, NY 12345 (US)
(72) Inventor: RASCH, Lyle, Timothy, Fairfield, OH 45014 (US); HEYWARD, John, Peter, Loveland, OH 45140 (US); REVERMAN, Jeffrey, John, Cincinnati, OH 45231 (US)
(74) Representative: Goode, Ian Roy
(86) International application number: PCT/US1998/012220
(87) International publication number: WO 1999/064724

(56) References cited:
- EP-A- 0 293 695
- US-A- 3 802 046
- US-A- 3 967 353
- US-A- 4 464 094
- US-A- 5 758 416
- US-A- 5 813 832

## Description

This invention relates to components of turbine engines, for example a vane segment of a turbine engine. More particularly, it relates to improvement of a gas turbine engine turbine vane segment which is intended to experience high temperature operation in the engine.

During operation in the hot section of a gas turbine engine, turbine vane segments which have been assembled into a vane assembly, sometimes called a nozzle or nozzle assembly, experience strenuous environmental conditions as well as thermal expansion and contraction resulting from thermal cycling of the engine. As a result of engine operation, vane segment members, particularly airfoils, can become worn or damaged to the point at which replacement or repair is required to maintain safe, efficient engine operation. Because such components in modem gas turbine engines are air cooled and of complex design, are made of relatively expensive materials, and are expensive to manufacture, it is desirable to provide the most vulnerable to damage of the segment members with the ability to avoid such damage. In addition, it is desirable to repair rather to replace members of existing turbine vane assemblies which have been damaged, for example, during engine operation, by providing an improved combination of members which will resist such damage in later operation.

An example of a gas turbine engine turbine nozzle or vane assembly, of the type to which the present invention relates, and showing the relationship of its members to one another and to the turbine engine is described in U.S. Patent 5,343,694 - Toborg et al., patented September 6, 1994, and in U.S. Patent 4,464,094. A method for repairing a turbine vane segment is disclosed in U.S. Patent 5,758,416.

The present invention, in one form, relates to a turbine vane assembly in accordance with claim 1.

In another form, the metallic bond is a combination of intermittently spaced apart tack welds and a brazed structure about the tack welds to define the metallic bond.

In another aspect of the invention there is provided a method of repairing a turbine vare assembly according to claim 7.

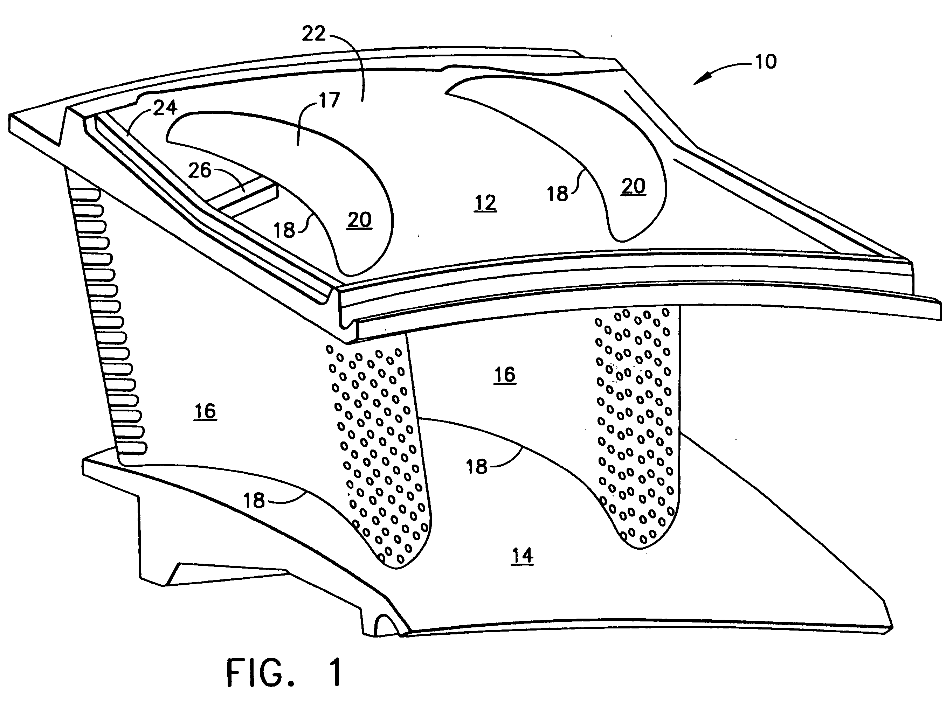

The drawing is a perspective view of a turbine engine turbine vane segment including a pair of airfoil members carried between inner and outer platform members.

Gas turbine engine manufactures have employed better, stronger materials in the original design of turbine engine components such as high pressure turbine members. These include directionally solidified or single crystal cast materials which have been seen to stay in service longer than conventionally cast materials. However, there are in gas turbine engine operation a large number of the older type of vane segments which are constructed entirely of conventionally cast members having a conventional, generally equiaxed microstructure. Because of the relatively high cost of such segments, when one or more members of the older type segment become damaged as a result of operation, it is much more desirable to repair the segment by replacing the damaged member rather than by replacing the entire segment.

Repairing the segment by replacing a damaged member has included first separating members of the segment and then reassembling the segment with a repaired or replaced member, more frequently one or more airfoil members. One form of such a separation and replacement is described in U.S. Patent 5,444 911 - Goodwater et al., patented August 29, 1995. In such known repair methods, the replacement member has been of the same alloy and microstructure as the member it has replaced. For example, in current use in some turbine vane assemblies are conventional, generally equiaxed microstructure castings of Co base alloys, such as the well known X-40 alloy. When a member such as an airfoil is replaced during repair, the replacement member has been a substantial duplicate of the member being replaced, both in alloy and microstructure.

The present invention provides an improved turbine engine vane segment by replacing the damaged member with an improved member of substantially the same design but having mechanical properties greater than those of the member it has replaced. This provides the member with significantly greater resistance to subsequent damage during engine operation. Such greater properties are provided, according to the present invention, by casting the improved replacement member of a Ni base superalloy having a directionally oriented microstructure. Such a microstructure includes single crystal as well as directionally solidified multi-elongated grain structures of the types widely reported and used in the gas turbine art. One such alloy and structure is discussed in U.S.Patent 4,169,742 - Wukusick et al., patented October 2, 1979.

The present invention, in one specific form, provides an improved member, such as an airfoil, as a replacement for a conventionally cast Co base alloy damaged member, cast from a Ni base superalloy to have a directionally oriented microstructure and mechanical properties greater than the mechanical properties of the damaged member. Because the alloys and microstructures of such combination of members in the improved vane segment are different, their coefficients of thermal expansion are different. When bonded together into a vane segment, the differences in thermal expansion characteristics must be considered, as discuss below in connection with the bond between such members.

The invention will be more clearly understood by reference to the drawing which is a perspective view of a turbine engine turbine vane segment, shown generally at 10, including a pair of airfoils 16 carried between outer and inner bands or platforms 12 and 14, respectively. Outer band 12 includes a radially outward or non-airflow surface 22 and an airfoil shaped opening 17. The airfoils 16 include airfoil ends 20 which are carried at metallic bonds 18 at junctures between the inner and outer bands or platforms. The present invention, in one form, provides an improved vane segment including, as an improved member, one or more airfoils 16 of a Ni base superalloy having a directionally oriented microstructure and a stress rupture strength greater than that of platforms 12 and 14. Because of the above-mentioned differences in coefficients of thermal expansion between the different alloys and microstructures of the replacement, improved airfoil or airfoils and the platforms, the bonds 18, according to the invention, are metallic bonds having a brazed structure and of strength sufficient to carry the stresses applied during expansion and contraction of the members during engine operation and cycling and avoid significant detrimental distortion of the members. In one form, the metallic bonds are a combination of separate tack welds intermittently spaced about the juncture between the airfoil and the platform, and of a brazed structure about the tack welds at the juncture.

During evaluation of the present invention, a gas turbine engine high pressure turbine vane nozzle segment as in the drawing, including the segment members of inner and outer platforms and a pair of airfoils carried and bonded therebetween, was evaluated for repair after engine operation. All of the members of the segment were conventionally cast of a commercially available Co base alloy, sometimes called X-40 alloy, and having a generally equiaxed microstructure. Properties of the X-40 alloy included an average stress rupture strength of about (10500 psi) 7,2395x10⁷ Pa at 982°C (1800° F) and 100 hours, and a coefficient of thermal expansion of about 5.1x10⁻⁶ °C⁻¹ (9.2 x 10⁻⁶ in / in / °F). It was concluded that the airfoil members were damaged and that replacement of the airfoil members was required for safe, efficient engine operation.

The damaged airfoils were separated from the platforms by mechanically cutting off the airfoils near the platforms and resizing airfoil shaped opening in the platforms to receive replacement airfoils. According to the present invention, the replacement airfoils were improved members to provide the vane segment with improved strength, operating life and resistance to operating wear or damage. The improved airfoils had the same shape and design of the damaged airfoils but were cast from a Ni base superalloy having a directionally oriented microstructure to provide greater mechanical properties than the X-40 alloy structure. The Ni base superalloy used for the improved member was the type described in U.S.Patent 5,173,255 - Ross et al., patented December 22, 1992. Properties of that Ni base superalloy, sometimes referred to as directionally solidified Rene' 142 alloy (DSR 142 alloy), included an average stress rupture life of about 300% greater than that of the above described X-40 Co base alloy which it replaced. In addition, it had a coefficient of thermal expansion of about 4.3x10⁻⁶ °C⁻¹ (7.7 x 10⁻⁶ in / in / °F), different from and less than the coefficient of thermal expansion of the X-40 alloy. This difference in thermal expansion characteristics of the dissimilar materials required attention to the bond between the improved Ni base airfoil members and the Co base alloy platform members with which they were to be joined: the bond would have to possess strength sufficient to carry stresses applied from such differences to avoid significant detrimental distortion, such as bowing, buckling, or cracking of the members or joints therebetween, during subsequent engine operation.

One form of such metallic bond between segment members, in the above example, used a brazing material including a mixture of a plurality of Ni base and Co base alloy powders, of the type described in U.S. Patent 4, 830.934 - Ferrigno et al., patented May 16, 1989. Such a brazing material sometimes is referred to as SA 650 material. Prior to bonding, the replacement, improved Ni base alloy airfoil members were assembled in reshaped airfoil shaped openings of the Co base platform members from the original vane segment. While such members of the segment were held in a proper design relationship, a series of intermittent conventional tungsten inert gas (TIG) tack welds, for example about 3 or 4 about each juncture, were made to bond, preliminarily, the improved airfoil members to the platforms. Thereafter, the above described brazing mixture of powders was disposed about the junctures, including at the tack welds, and then heated to bond the members by brazing at the junctures. The resulting bond included a brazed structure which is believed to have a coefficient of thermal expansion between that of the X-40 Co base alloy and that of the DSR 142 Ni base superalloy to accommodate differences in thermal expansion and contraction of the members during engine operation and cycling.

Additionally in this example, strengthening structural member or ribs 24 and 26 were added to surface 22 of outer band 12 to assist the band 12 in carrying the stresses, and resisting distortion, caused by the differing coefficients of thermal expansion at the operating temperature and cycle of the vane segment. Rib 24 extended substantially axially along the radially outward or non-airflow surface 22 of the outer band 12. Rib 24 was a wire of the commercially available L-605 Co base alloy which was tack welded to the surface by the commercial Tungsten Inert Gas (TIG) welding process, then further bonded to such surface with the SA-650 bonding material. Rib 26 extended substantially circumferentially on surface 22 from rib 24 toward airfoil shaped opening 17. Rib 26 was a wire of L-605 alloy TIG welded to surface 22.

The improved turbine engine vane segment combination of the present invention can increase the life of such components originally made of conventionally cast alloys and provide improved engine performance over a longer period of time, without changing the design of the component. Performance is improved because the improved member has greater stress rupture strength and higher resistance to creep during operation. This allows such features as the trailing edges of airfoils to remain in the same position relative to supporting platforms during engine operation. This is opposed to the conventionally cast airfoils, which can creep and bow during operation, resulting in engine performance losses. The present invention has been described in connection with specific examples and embodiments. However, it will be understood by those skilled in the art that these are typical of, rather than limitations on, the invention which is capable of variations and modifications without departing from the scope of the appended claims.

## Claims

1. A turbine vane assembly (10) comprising a plurality of segment members each including at least one airfoil member (16) and first and second spaced apart band members (12, 14) including an airfoil shaped opening (17), the airfoil member (16) being carried between the spaced apart band members (12, 14), the airfoil member (16) being held at airfoil ends (20) with the first and second band members (12, 14) with metallic bonds (18) therebetween, **characterised in that**
at least one airfoil member of at least one segment member, but not all airfoil members, is an improved airfoil member having a directionally oriented cast Ni base superalloy microstructure with a first stress rupture strength and a first coefficient of thermal expansion;
the balance of the airfoil members and band members is of Co base alloy having a conventionally cast substantially equiaxed alloy microstructure with a second stress rupture strength less than the first stress rupture strength and a second coefficient of thermal expansion different from the first coefficient of thermal expansion; and,
a metallic bond is provided between the improved airfoil member and the band members, the bond including a brazed structure having a strength which will carry stresses applied during expansion and contraction of the members having the differing first and second coefficients of thermal expansion at the bond without significant detrimental distortion of the segment members, the coefficient of thermal expansion of the brazed structure being between the first and second coefficients of thermal expansion.

2. The assembly of claim 1 in which the brazed structure of the metallic bond includes a plurality of spaced apart tack welds.

3. The assembly of claim 1 in which the Co base alloy is X-40 alloy.

4. The assembly of claim 1 in which a band includes at least one strengthening member (24, 26) bonded to a non-airflow surface (22) of the band (12).

5. The assembly of claim 4 in which:
the non-airflow surface (22) is on the outer band (12); and,
the strengthening member (24) is a first rib extending substantially axially along the non-airflow surface (22).

6. The assembly of claim 5 in which a second strengthening rib (26) extends substantially circumferentially on the band non-airflow surface (22) from the first rib (24) toward the airfoil shaped opening (17) in the outer band (12).

7. A method of repairing a turbine vane assembly in which the vane assembly comprises a plurality of segment members each including at least one airfoil member (16) and first and second spaced apart band members (12, 14) including an airfoil shaped opening (17), the airfoil member (16) being carried between the spaced apart band members (12, 14), the airfoil member (16) being held at airfoil ends (20) with the first and second band members (12, 14) with metallic bonds (18) therebetween, the band members and at least some of the airfoil members comprising Co-base alloy castings; the method comprising:
removing one or more of the Co-base alloy airfoils, and replacing the or each removed airfoil member with a replacement airfoil member having a directionally oriented cast Ni base superalloy microstructure, and brazing the replacement airfoil member to the inner and outer bands with a brazing material having a coefficient of thermal expansion between the coefficients of thermal expansion of the replacement airfoil member and the band members.

8. The method of claim 7 including making a plurality of spaced apart tack welds between the replacement airfoil and the inner and outer bands before brazing.

9. The method of claim 7 including bonding at least one strengthening member (24, 26) to a non-airflow surface (22) of the outer band (12).

## Patentansprüche

1. Turbinenschaufelbaugruppe (10), die eine Vielzahl von Segmentgliedern umfasst, zu denen jeweils mindestens ein Schaufelblattglied (16) sowie ein erstes und ein zweites Deckplattenglied (12, 14) gehören, die zueinander beabstandet sind und eine schaufelblattförmige Öffnung (17) aufweisen, wobei das Schaufelblattglied (16) zwischen den zueinander beabstandeten Deckplattengliedern (12, 14) getragen wird, und wobei das Schaufelblattglied (16) an den Blattenden (20) vom ersten und zweiten Deckplattenglied (12, 14) durch dazwischen liegende metallische Verbindungen (18) gehalten wird, **dadurch gekennzeichnet, dass**
von mindestens einem Segmentglied mindestens ein Schaufelblattglied, aber nicht alle Schaufelblattglieder, ein verbessertes Schaufelblattglied ist, das eine direktional ausgerichtete, aus einer Nickelbasis-Superlegierung gegossene Mikrostruktur mit einer ersten Zeitstandfestigkeit und einem ersten Wärmeausdehnungskoeffizienten aufweist;
die übrigen Schaufelblattglieder und Deckplattenglieder aus einer Kobaltbasislegierung bestehen und eine konventionell gegossene, im Wesentlichen äquiaxiale Mikrostruktur mit einer zweiten Zeitstandfestigkeit und einem zweiten Wärmeausdehnungskoeffizienten aufweisen, der sich vom ersten Wärmeausdehnungskoeffizienten unterscheidet, und
zwischen dem verbesserten Schaufelblattglied und den Deckplattengliedern eine metallische Verbindung bereitgestellt wird, die eine hartgelötete, formfeste Struktur aufweist, die während der Ausdehnung und Schrumpfung der Glieder mit den unterschiedlichen ersten und zweiten Wärmeausdehnungskoeffizienten Spannungen an der Verbindung aufnimmt, ohne dass es zu einer signifikanten schädlichen Verformung der Segmentglieder kommt, wobei der Wärmeausdehnungskoeffizient der hartgelöteten Struktur zwischen dem ersten und dem zweiten Wärmeausdehnungskoeffizienten liegt.

2. Baugruppe nach Anspruch 1, **dadurch gekennzeichnet, dass** die hartgelötete Struktur der metallischen Verbindung eine Vielzahl von zueinander beabstandeten Heftschweißungen aufweist.

3. Baugruppe nach Anspruch 1, **dadurch gekennzeichnet, dass** es sich bei der Kobaltbasislegierung um eine x-40-Legierung handelt.

4. Baugruppe nach Anspruch 1, **dadurch gekennzeichnet, dass** eine Deckplatte mindestens ein Verstärkungsglied (24, 26) aufweist, das mit einer nicht zum Schaufelblatt gehörenden Fläche (22) der Deckplatte (12) verbunden ist.

5. Baugruppe nach Anspruch 4, **dadurch gekennzeichnet, dass**
die nicht zum Schaufelblatt gehörende Fläche (22) auf der äußeren Deckplatte (12) liegt, und
das Verstärkungsglied (24) eine erste Rippe ist, die im Wesentlichen axial entlang der nicht zum Schaufelblatt gehörenden Fläche (22) verläuft.

6. Baugruppe nach Anspruch 5, **dadurch gekennzeichnet, dass** eine zweite Verstärkungsrippe (26) im Wesentlichen in Umfangsrichtung auf der nicht zum Schaufelblatt gehörenden Fläche (22) der Deckplatte von der ersten Rippe (24) zu der schaufelblattförmigen Öffnung (17) in der äußeren Deckplatte (12) verläuft.

7. Verfahren zur Reparatur einer Turbinenleitschaufelbaugruppe, bei der die Leitschaufelbaugruppe eine Anzahl von Segmentgliedern aufweist, die jeweils wenigstens ein Leitschaufelglied (16) und wenigstens ein erstes und ein zweites voneinander beabstandetes Deckplattenglied (12, 14) aufweist, die jeweils eine schaufelblattförmige Öffnung (17) begrenzen, wobei das Leitschaufelglied (16) zwischen den voneinander beabstandeten Deckplattengliedern (12, 14) getragen ist, wobei das Schaufelblattglied (16) an Blattenden (20) mit dem ersten und dem zweiten Deckplattenglied (12, 14) mit metallischen Verbindungen (18) gehalten ist, wobei die Deckplattenglieder und wenigstens einige der Schaufelglieder Kobaltbasislegierungsgussstücke sind, wobei das Verfahren beinhaltet:
Entfernen einer oder mehrerer Kobaltbasislegierungsleitschaufeln und Ersetzen des oder jedes entfernten Leitschaufelglieds mit einem Ersatzleitschaufelglied, das eine richtungsorienterte, gegossene Nickelbasissuperlegierungsmikrostruktur aufweist und Hartlöten des Ersatzleitschaufelglieds an das innere und das äußere Deckplattenglied mit Lötmaterial, das einen Wärmeexpansionskoeffizienten zwischen den Koeffizienten der Wärmeexpansion des Ersatzleitschaufelglieds und des Deckplattenglieds aufweist.

8. Verfahren nach Anspruch 7, bei dem vor dem Hartlötvorgang eine Anzahl voneinander beabstandeter Heftschweißungen zwischen der Ersatzleitschaufel und dem inneren und dem äußeren Deckplattenglied hergestellt wird.

9. Verfahren nach Anspruch 7, bei dem wenigstens ein Verstärkungsglied (24, 26) mit einer der Luftströmung nicht ausgesetzten Oberfläche (22) des äußeren Deckplattenglieds (12) verbunden wird.

## Revendications

1. Assemblage d'aube de turbine (10) comprenant une pluralité d'éléments de segment comportant chacun au moins un élément profilé (16) et des premier et deuxième éléments de bande espacés (12, 14) incluant une ouverture en forme d'élément profilé (17), l'élément profilé (16) étant porté entre les éléments de bande espacés (12, 14), l'élément profilé (16) étant maintenu en ses extrémités (20) par les premier et deuxième éléments de bande (12, 14), avec des jonctions métalliques (18) entre eux, **caractérisé en ce que** :
au moins un élément profilé d'au moins un élément de segment, mais pas tous les éléments profilés, est un élément profilé amélioré ayant une microstructure de superalliage de coulée à base de nickel directionnellement orientée qui a une première résistance à la rupture sous tension et un premier coefficient de dilatation thermique
le reste des éléments profilés et des éléments de bande est en alliage à base de cobalt ayant une microstructure d'alliage de coulée conventionnelle substantiellement équiaxiale qui a une deuxième résistance à la rupture sous tension, inférieure à la première résistance à la rupture sous tension, et un deuxième coefficient de dilatation thermique, différent du premier coefficient de dilatation thermique ; et
une jonction métallique est réalisée entre l'élément profilé amélioré et les éléments de bande, la jonction incluant une structure soudée ayant une résistance qui peut supporter les efforts appliqués pendant l'expansion et la contraction des éléments ayant les différents premier et deuxième coefficients de dilatation thermique au niveau de la jonction sans distorsion néfaste significative des éléments de segment, le coefficient de dilatation thermique de la structure soudée étant situé entre les premier et deuxième coefficients de dilatation thermique.

2. Assemblage selon la revendication 1, dans lequel la structure soudée de la jonction métallique comporte une pluralité de soudures de pointage espacées.

3. Assemblage selon la revendication 1, dans lequel l'alliage à base de cobalt est un alliage X-40.

4. Assemblage selon la revendication 1, dans lequel une bande comporte au moins un élément de renforcement (24, 26) lié à une surface sans écoulement d'air (22) de la bande (12).

5. Assemblage selon la revendication 4, dans lequel :
la surface sans écoulement d'air (22) est sur la bande extérieure (12) ; et
l'élément de renforcement (24) est une première nervure qui s'étend substantiellement de manière axiale le long de la surface sans écoulement d'air (22).

6. Assemblage selon la revendication 5, dans lequel une deuxième nervure de renforcement (26) s'étend substantiellement de manière périphérique sur la surface sans écoulement d'air (22) de la bande, depuis la première nervure (24) vers l'ouverture en forme d'élément profilé (17) de la bande extérieure (12).

7. Procédé de réparation d'un assemblage d'aube de turbine dans lequel l'assemblage d'aube comprend une pluralité d'éléments de segment comportant chacun au moins un élément profilé (16) et des premier et deuxième éléments de bande espacés (12, 14) incluant une ouverture en forme d'élément profilé (17), l'élément profilé (16) étant porté entre les éléments de bande espacés (12, 14), l'élément profilé (16) étant maintenu en ses extrémités (20) par les premier et deuxième éléments de bande (12, 14), avec des jonctions métalliques (18) entre eux, les éléments de bande et au moins certains des éléments profilés comprenant des pièces moulées en alliage à base de cobalt ; le procédé comprenant les opérations consistant à :
retirer un ou plusieurs des éléments profilés en alliage à base de cobalt, et remplacer le ou chaque élément profilé retiré par un élément profilé de rechange ayant une microstructure de superalliage de coulée à base de nickel directionnellement orientée, puis souder l'élément profilé de rechange sur les bandes intérieure et extérieure avec un matériau de soudure ayant un coefficient de dilatation thermique situé entre les coefficients de dilatation thermique de l'élément profilé de rechange et des éléments de bande.

8. Procédé selon la revendication 7, comprenant le fait de réaliser une pluralité de soudures de pointage espacées entre l'élément profilé de rechange et les bandes intérieure et extérieure avant de souder.

9. Procédé selon la revendication 7, comprenant le fait de lier au moins un élément de renforcement (24, 26) à une surface sans écoulement d'air (22) de la bande extérieure (12).
